(19) Europäisches Patentamt
European Patent Office
Office européen des brevets

(11) **EP 2 536 062 B1**

(12) **EUROPEAN PATENT SPECIFICATION**

(45) Date of publication and mention
of the grant of the patent:
**24.07.2019 Bulletin 2019/30**

(51) Int Cl.:
*H04L 9/32* (2006.01)     *H04L 9/08* (2006.01)

(21) Application number: **12180192.2**

(22) Date of filing: **21.12.2007**

(54) **Improvements in communication security**

Verbesserung bei der Kommunikationssicherheit

Améliorations à la sécurité de communication

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **22.12.2006 GB 0625851**

(43) Date of publication of application:
**19.12.2012 Bulletin 2012/51**

(62) Document number(s) of the earlier application(s) in accordance with Art. 76 EPC:
**07848683.4 / 2 127 199**

(73) Proprietor: **Oxford University Innovation Limited Botley**
**Oxford OX2 0JB (GB)**

(72) Inventors:
• **Roscoe, Andrew**
  **Oxford, OX1 3QD (GB)**
• **Chen, Bangdao**
  **Oxford, OX1 3QD (GB)**

(74) Representative: **Barton, Russell Glen**
**Withers & Rogers LLP**
**4 More London Riverside**
**London SE1 2AU (GB)**

(56) References cited:
**WO-A1-02/19211**     **WO-A2-98/47258**
**US-A1- 2002 018 570**     **US-A1- 2003 220 881**
**US-A1- 2005 228 983**

• **NGUYEN AND A W ROSCOE L H: "Efficient group authentication protocols based on human interaction", INTERNET CITATION , 1 August 2006 (2006-08-01), pages 1-32, XP007906510, Retrieved from the Internet: URL:http://www.easychair.org/FLoC-06/fcs-a rspa06.pdf [retrieved on 2008-12-01]**
• **CREESE S ET AL: "Exploiting Empirical Engagement in Authentication Protocol Design", LECTURE NOTES IN COMPUTER SCIENCE, SPRINGER VERLAG, BERLIN; DE, vol. 3450, 1 April 2005 (2005-04-01), pages 119-133, XP002424557,**
• **MENEZES A J ET AL: "HASH FUNCTIONS AND DATA INTEGRITY", HANDBOOK OF APPLIED CRYPTOGRAPHY; [CRC PRESS SERIES ON DISCRETE MATHEMATICES AND ITS APPLICATIONS], CRC PRESS LLC, USA, 1 January 1997 (1997-01-01), pages 321-383, XP002275660, ISBN: 978-0-8493-8523-0**
• **HUANG A L ET AL: "Cryptographic Hash Functions and Low-Power Techniques for Embedded Hardware", INDUSTRIAL ELECTRONICS, 2005. ISIE 2005. PROCEEDINGS OF THE IEEE INTER NATIONAL SYMPOSIUM ON DUBROVNIK, CROATIA JUNE 20-23, 2005, PISCATAWAY, NJ, USA,IEEE, vol. 4, 20 June 2005 (2005-06-20), pages 1789-1794, XP010850365, ISBN: 978-0-7803-8738-6**
• **MENEZES A ET AL: "Handbook of Applied Cryptography , IDENTIFICATION AND ENTITY AUTHENTICATION", HANDBOOK OF APPLIED CRYPTOGRAPHY; [CRC PRESS SERIES ON DISCRETE MATHEMATICES AND ITS APPLICATIONS], CRC PRESS LLC, USA, 1 January 1997 (1997-01-01), pages 385-424, XP002262234, ISBN: 978-0-8493-8523-0**

- BLACK J ET AL: "UMAC: FAST AND SECURE MESSAGE AUTHENTICATION", ADVANCES IN CRYPTOLOGY. CRYPTO '99. 19TH ANNUAL INTERNATIONAL CRYPTOLOGY CONFERENCE. SANTA BARBARA, CA, AUG. 15 - 19, 1999. PROCEEDINGS; [LECTURE NOTES IN COMPUTER SCIENCE ; VOL. 1666], BERLIN : SPRINGER, DE, 15 August 1999 (1999-08-15), pages 216-233, XP001194950, ISBN: 978-3-540-66347-8

**Description**

The invention relates to improvements in communication security and in particular to improvements in communication over computer-based networks to enable greater security and customer confidence in performing financial transactions over such networks.

At present, "Chip and PIN" technology enables an extra level of authentication technology to be applied to verify that the customer and card are valid in "customer present" transactions. It is limited in such circumstances by the need for the customer to have complete trust in the merchant not to use the data it receives improperly, and limited in other means of transaction, for example internet, by the need for there to exist an authenticated secret channel between the card and the merchant. Specifically the customer needs to know that he or she is paying the desired merchant the agreed amount in the intended transaction. While this is obvious in the majority of "customer present" transactions, it is much more problematic remotely when the communications mediums and equipment used for communication cannot be considered secure.

In conducting transactions over potentially insecure media such as the internet, it is possible for third parties to intercept communications and/or effect miscommunication thereby to gain access to confidential customer information for example through malicious software on a customer's personal computer and/or through other forms of fraudulent online activity. Accordingly, the applicant has recognised the need to address these issues and enable proper authentication of a merchant to provide a customer with increased assurance of the security of their confidential information before proceeding with an online transaction, for example. This application provides means for such authentication, and subsequent secure communication, to be established. This secure channel provides means for information authenticating the customer and card to the merchant to be communicated. This is likely to include PIN or other personal data from the customer, who can send it confident in the knowledge that it is being sent insecurely or to an inappropriate party.

It is known how to provide certain levels of security in trading which provide customers with a level of security in conducting financial transactions. However, many such transactions rely on a customer providing a merchant with some confidential information which in fact need only be known by the bank which will facilitate actual transfer of funds to the merchant's bank account, and the quantity of information transmitted is limited to the amount a customer can type conveniently. Furthermore, other potentially valuable information such as the customer's PIN may be considered too secret to be revealed to the merchant's system. Accordingly, the applicant has recognised the need to enable more secure and higher bandwidth communication between a customer, merchant and bank which enables financial transactions and provides a customer with the security of not disclosing certain confidential information to the merchant and the ability to use "Chip and PIN" or similar technologies. The applicant's technology for performing this is able to achieve this result with simple, cheap, low-power technology as described later.

Furthermore the applicant's technology offers the opportunity to make "Chip and PIN" style usage more secure by not storing the PIN on the chip as is often done at the time of writing, and by removing the means by which an untrustworthy merchant could gain useful long-term information about the card and PIN.

In conducting online transactions, it is also possible for third parties to intercept communications and/or effect miscommunication thereby to gain access to confidential customer information for example through malicious software on a customer's personal computer and/or through other forms of fraudulent online activity. Accordingly, the applicant has recognised the need to address these issues and enable proper authentication of a merchant to provide a customer with increased assurance of the security of their confidential information before proceeding with an online transaction, for example. The authentication of the customer to the merchant is achieved by means such as interactions with the customer's card and verification of the customer's PIN. This technology will greatly extend the range of circumstances where these things can be done.

Two prior art patents, namely US 2003/0126094 are WO 02/19211 are thought to be of some relevance here in the sense that they both try not to reveal the customers' details (credit card numbers) to the merchant during financial transactions. However neither of them provide authentication of the Merchant to the Customer or Trusted Third Party. Moreover, in not revealing the credit card number, both propose to use a TTP, whom the customer has to be authenticated to by passwords and usernames, to solve the problem of anonymity and confidentiality where the TTP ends up knowing all the details of customers' bank accounts. In contrast the present invention resolves this by using novel security protocols and new cryptographic primitives without too much work from the bank or trusted party.

In US 2003/0126094, since the customer wants to remain anonymous and does not want to reveal his/her personal and credit card details to the merchant, there is a TTP that stores customers' details and their proxy card number/ID (of the identical format which is indistinguishable to the merchant). The customer sends the proxy information to the merchant who then forwards this to what it believes to be the Customer's bank but what is actually the TTP. The TTP uses the proxy information to look up the real bank account/transaction and telephone the customer to verify the transaction (termed the Persistent channel). If everything is OK, TTP goes to the bank.

This is relevant to the present invention in two aspects: not revealing real credit card number to the merchant and using telephone to obtain a higher security level (authorisation from the customer). But there is no authentication of the Merchant to the Customer or TTP and it uses a completely different approach to that of the present invention, by using a TTP who also knows everything about the customer.

In WO 02/19211 since the customer wants to remain anonymous and does not want to reveal credit card's details to the merchant, there is a TTP termed Billing system that receives and verifies all the details of the customer's transaction. And then if everything is fine the TTP sends its approval to the Merchant and the Customer. However, this is not be convenient since it requires a TTP trusted by both Customers and Merchant. This is also similar to US 2003/0126094 except that the customer does not receive any strong guarantee from the TTP by telephone conversation. Again neither provides authentication of the Merchant to the Customer or TTP. These and other issues are addressed by the present invention, which seeks to avoid or at least mitigate existing security issues in network communications particularly those involved in financial transactions over the Internet.

The invention is defined by the appended claims.

According to a first aspect of the invention there is provided a method of authenticating communication between a first and second party (or node) over an insecure, high bandwidth communications network, in which the first party (C) authenticates the second party (M) using a communications protocol comprising a first communications phase through a first communications channel over the insecure, high bandwidth communications network to establish a secure mode of communications between the first and second party, followed by a second communications phase of receiving information from the second party over a second communications channel, such as an empirical channel, and enabling a user to make a human comparison of the information received from the second party with information generated by the first party thereby enabling the user to authenticate the second party in the event of the information from both parties agrees.

Also, an aspect of the invention provides a method of authenticating communication by a first node with a second node over an insecure communications network, comprising;

an agreement stage comprising agreeing a hash function and communications protocol;

a first message stage comprising sending a first message from the second node to the first node comprising a longhash element,

a second communication stage comprising the second node communicating to the first node a first argument operated on by the agreed hash function to provide a longhash element,

a third message stage comprising sending a second message from the first node to the second node enabling the second node to determine the data committed by the longhash element it received,

a fourth message stage comprising sending a second message from the second node to the first node enabling the first node to determine the data committed by the longhash element it received,

a digest stage wherein the first and second node generate a digest using at least the two pieces of committed data thereby to enable the user of the first node to authenticate the second node by human comparison of both the digests.

Another aspect provides a method of authenticating communication by a first node with a second node over an insecure communications network, comprising; an agreement stage comprising agreeing a hash function and communications protocol; a first message stage comprising sending a first message from the second node to the first node comprising a first longhash element, the first node sending a second message comprising a second longhash element; a second communication stage comprising the second node communicating to the first node a first argument operated on by the agreed hash function to provide the first longhash element, and the first node communicating to the second node a second argument operated on by the agreed hash function to provide the second longhash element; a digest stage wherein the first and second node generate a digest using at least the first and second argument thereby to enable the user of the first node to authenticate the second node by human comparison of both the digests.

According to a further aspect of the invention there is provided a security device, for enabling authentication of a merchant to a customer over an insecure communications network, the security device comprising a processor adapted to perform encrypted communication of data via a data transfer interface to the communications network, and a user interface enabling user input of data and output of data to a user, the security device further being adapted to enable communication of secure information, such as financial data, to a third party, such as a bank, via the data transfer interface over the insecure communications network after the user has authenticated the identity of the merchant using the security device.

Beneficially, the security device hereinafter often abbreviated SD, can be a relatively inexpensive electronic device with the following properties:

1. It is stateless (no information is stored from one use to the next, so losing it would not compromise any security).

2. It guarantees not to release any information to a party with whom it and the user have not achieved HCBK, or other suitable protocol, authentication, and then only encrypted under a key then has been established and authenticated between the customer and merchant/bank.

3. It does not matter if the computer it is connected to, or the telephone system, have been corrupted (e.g. by a virus).

4. It has different modes of operation: over the telephone and over the Internet, for example.

5. It does not require privileged access to the chip on a card (for example to long term secret cryptographic information): it acts as an intermediary between the card and the merchant/bank.

6. The customer thinks of the SD as a device enabling him or her to make secure electronic connection remotely with a merchant or bank. The main requirement on the customer is to check that a short digest value communicated by the merchant corresponds to one calculated by his or her SD. This check might take any of several forms, as discussed later.

Accordingly, the customer can be confident there is no man-in-the-middle who can steal his or her card details or PIN.

In present card transactions, security details of the card are either directly available to the merchant via a card terminal, or via plaintext over a medium like the Internet. According to a further aspect of the invention, means are provided so that the combination of a customer's card and SD can provide this information to the merchant in a form which is useless for doing anything other than verifying to the bank that the customer and card are present and approve a particular transaction. This is done without using long term public keys and can therefore be computed sufficiently quickly on cheap, simple and low-power devices. It also makes practical (possibly with additional functionality present on the card's chip or via online connection to the bank using the same protocol otherwise used with merchants) customers granting the merchant a one-time voucher that cannot be used to create new ones. This could be transmitted to merchants unable to run the protocols with the customer, either because of lack of equipment or because the transaction is by post.

Other aspects and features of the invention will be apparent from the specification and appended claims.

Embodiments of the invention will now be described by way of example only, with reference to the following drawings in which:

Figure 1 is a schematic view of a communications network comprising a user, or customer, a merchant and a bank;

Figure 2 is a schematic block diagram of a first embodiment of a security device according to the invention;

Figure 3 is a schematic diagram of the communications involved in a run of the SHCBK-SP protocol; and

Figure 4 is a schematic block diagram of components of a hardware form of the invention for implementing a digest function based on a Toeplitz model.

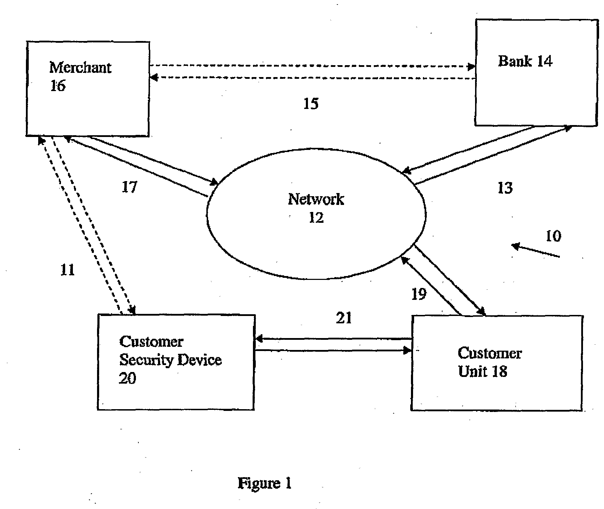

Referring to Figure 1, there is shown a communications system 10 according to the invention comprising a communications network 12 such as the internet, which enables communication between a bank 14, a merchant 16 and a customer C using customer unit 18 via network interfaces 13, 17 and 19 respectively. Each of the bank 14, merchant 16 and customer unit 18 might take the form of computer based units, including mobile phones, personal computers and/or more sophisticated computer systems such as web servers and/or in the case of merchant 16, an interactive website hosted by an appropriate web server. Whether or not the merchant 16 and bank 14 choose to communicate via the network 10 or a separate mechanism 15, it is assumed that such communication is secured. In many cases this security will be provided by conventional means such as protocols built on top of a PKI:
In one form therefore, the network 12 is the Internet and merchant 16 provides an interactive trading site on the Internet enabling users to purchase goods and services. In this form of the system 10 the customer unit 18 can be a standard personal computer forming a web client through which a user, or customer, is able to access the website of merchant 16 and to view the available goods and services using a standard Internet browser application.

In another form, customer unit 18 in Figure 1 represents a device provided by a merchant at a retail outlet such as a petrol station or shop, in which case the interface 19 between customer unit 18 and network 12 might be secure as might also be network 12 itself for example being provided by a secure and dedicated communications network.

In order to provide the required level of authentication of merchant 16 to customer 18 in the circumstances of an insecure network 12 and/or insecure customer unit 18, and/or to avoid giving the merchant any confidential customer information, a customer security device 20 is provided which interfaces via communications interface 21 with customer unit 18.

Therefore, the connection between the SD 20 and the Merchant 21 may be simplified to a single link. This will frequently occur in "customer present" transactions where the SD makes a direct link with hardware provided by the merchant rather than via the customer unit 18 and network 12. In any case, whether these intermediaries are present or not, the overall objective will be to enable secure and authenticated communications between security device (20) and merchant (16) without relying on security of either the intervening communications links or intermediaries.

Interface 21 might comprise a wireless or wired connection. By way of example of a wireless connection, the customer security device might be a portable handheld device comprising a radio frequency, microwave and/or infra-red receiver and transmitter for interfacing with customer unit 18. The customer security device 20 might also be connectable using a wired connection such as a USB connection. Further variations in the form of system 10 will be discussed later.

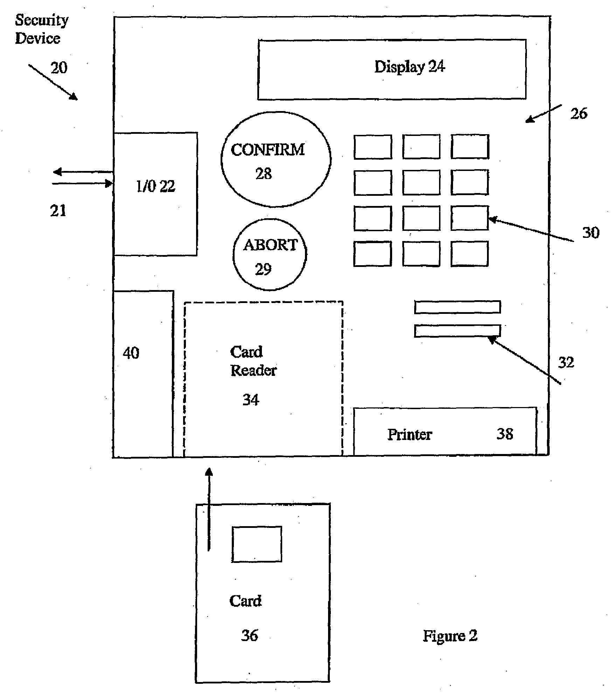

Referring to Figure 2 there is shown, a customer security device 20 according to the invention comprising a data transfer interface comprising input/output ports 22 enabling communication via interface 21 with other devices such as customer unit 18. Security. device 20 further comprises a user interface enabling a user to input and receive information from the security device for example by manual data entry and visual/acoustic output. Here a display 24 is provided such as an LCD display capable of displaying alphanumeric information and security device 20 further comprises user inputs 26 comprising a range of keys in the form of a confirm button 28, an abort button 29, and an array of 12 keys for example enabling input of alphanumeric information akin to the keys on a mobile phone keypad. Further input keys 32, here two keys, are provided to enable user interaction for example in response to information displayed via display unit 24. Other user inputs that can be included include biometric data readers such as a thumb-print reader. This could be treated in the protocol logics below like a PIN.

The security device further comprises a card interface enabling the security device 20 to interchange information with the chip on a credit card 36 by insertion of card 36 into the card reader 34.

Additionally the security device 20 may contain an input device 40 for inputting information which might be requested for example shown on display screen 24, such as barcode data or similar hence the data might be entered via an optical character reader or barcode scanner. In one form, the input device 40 might be in the form of a wand or other device removable from security device 20 but connectable thereto e.g. via appropriate wiring to enable a user to scan a barcode, alphanumeric characters and/or other image or biometric data, remotely from the security device. This may well be appropriate when the security device 20 takes the form of a desktop device rather than a portable device. Additionally, the security device 20 may further comprise a printer 38 to enable marking on a substrate such as a piece of paper. Printer 38 might for example be a dot matrix printer enabling printing e.g. of a barcode onto paper fed through the printer 38 for use in postal transactions as detailed below. It is expected that such data is tested by card/SD by reference to identity information held on the card, the success of which is a precondition to the card performing its role in the protocols below."

**Analysis**

We now analyse the requirements for a security device that supports credit card transactions.

The normal type of transaction is a customer attempting to pay a merchant, though there may be variants on this such as "blocking" transactions and giving the merchant the right to claim payment up to a certain limit. The essential requirements for such transactions are

1. The merchant is assured that the card is genuine and that all correct identification information required for a transaction such as a PIN have been entered for this transaction. In many cases the merchant will also need clearance from the banking system for the transaction.

2. The customer is assured that he or she is paying the amount of money desired to the intended merchant. In particular, he or she needs to be assured that the information given cannot be abused by a third party who may be listening or who may be interfering with the interaction.

3. It is highly desirable also that the customer's information cannot be abused, intentionally or otherwise (e.g. in a security leak or via a corrupt employee), by the merchant.

The authentication problem for the merchant is relatively simple, provided the card system's general security is adequate. The merchant should have separate secure communication with the banking system (via interface 15 or interfaces 17 and 13 via network 12 for example). We note that it is natural to identify a card by its electronic name and that, if the card contained a certificated public key, the merchant is in a good position to check the validity of said key. In other words, if we desire, it is practical to implement a PKI of cards.

The authentication problem for the customer is harder. Firstly the customer will not naturally want to identify a merchant by a usable electronic name, and even if this were done it would not be adequate, since customer C needs to know that no intruder can pay the bill of another customer to the same merchant using C's card. In fact, C needs to know that his or her card is paying the amount required for and within the particular transaction intended.

PKIs are frequently mis-understood and used incorrectly by the man in the street.

Furthermore, the computing and power requirements of public key encryption under strong keys (needed both to check key certificates and use the resulting keys) may be unattractive to the designers of smart cards and cheap devices like SDs.

What is needed for a customer is a way in which he or she can know they are connected to the particular

- Internet session

- Telephone call

- Petrol pump session

- Till etc

to which they want to make payment, preferably without recourse to a PKI.

Protocols

Communications protocols, which are suitable to authenticate merchant 16 to a customer C or user of security device 20 in the manner required above, will now be described:

The protocols described here fall into the family of protocols termed HCBK, or Hash Commitment Before Knowledge. These assume that the parties share a high-bandwidth low-security communications medium which allows a potential attacker the vulnerabilities of the standard Dolev-Yao model, plus the ability to carry out combinatorial attacks such as the "birthday attack" on cryptographic values, provided these are computationally feasible. They also assume that there are low-baridwidth "empirical channels", typically mediated by actions of the human user(s). These can have any of the above vulnerabilities except that communication on them is not spoofable: one party will never believe that a communication from one party is really from another.

The protocols are designed to allow humans to compare short values without being vulnerable to combinatorial attacks such as the birthday attack that would normally apply to similarly-sized data. To be precise, for human(s) comparing k bits of information, the likelihood of any attack by any current computer, the probability of a successful attack succeeding will be $2^{-k}$ and any unsuccessful attack with a more than negligible chance of succeeding can be discovered.

While this mode of operation appears similar to Bluetooth, it avoids known pitfalls of that approach. These are firstly that the Bluetooth password must be kept secret, whereas there is no need to keep our digest secret, arid secondly that password guessing attacks that can compromise Bluetooth are avoided here; indeed the protocols are designed to make any analogous attack useless.

The protocols allow secure communications to be obtained between devices that encounter each other in a wide range of circumstances, based on nothing further than an insecure means of communication, a mutual understanding of a protocol, and one or two human users making comparisons.

All the following protocols have both Symmetric and Asymmetric versions, of which the symmetric versions are those quoted below. The asymmetric versions are identical except that one participant, in our present invention always the merchant 16, does not have the means to satisfy itself that the two digests are equal in the final step. In each case the symmetric versions of the protocols mutually authenticate the merchant's and customer's electronic identities as belonging to the two parties agreeing the digests; and a secret shared session key is established that each knows is with the other party. In each case (as presented here) the asymmetric version authenticates the merchant's electronic identity to the customer, who also knows that the resulting key is a secret shared with the merchant: that is the important direction for reasons discussed earlier.

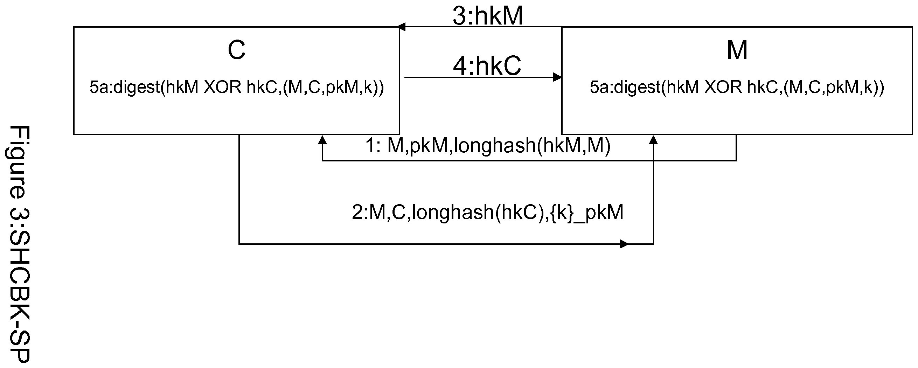

The following modified HCBK protocol between C and M can be used. Here C is the customer's security device 20 and M is the merchant 16. The following is its symmetric version and is shown schematically in Figure 3.

1: M -> C: M,C,pkM, longhash(hkM,M)

2: C -> M: M, C, longhash(hkC,C),{k}_pkM

3: M -> C: hkM

4: C -> M: hkC

5a: C,M display: digest(hkM XOR hkC,(M,Q,PkM,k))

5b: C,M agree on this value through human checking or other empirical channel

Here, pkM is a public key for M. If the card/SD has sufficient power it can be a strong and possibly certificated public key. If they do not have this power it can be a weak public key generated freshly for this session. It must then be strong enough to resist attack during the period of the transaction, say about 2 minutes and preferably up to about 5 minutes. hkM and hkC are random values, and longhash() is a cryptographic hash function, all of sufficient length that means that it is infeasible for someone knowing the cryptographic hashes longhash(hkM,M) and longhash(hkC,C) to compute any useful approximations to hkM or hkC, and so that it is infeasible to use attacks such as the birthday attack to substitute values in messages 1 to 4 and so that hkM XOR hkC has a sufficient degree of cryptographic entropy so that it can key the cryptographic digest used in messages 5a and 5b. k is a proposed session key (for an appropriate form of symmetric-key cryptography) chosen randomly by C that e used for secure communication between C and M subsequent to successful completion of the protocol. digest(hk,m) is a function chosen so that, for any distinct m1 and m2, as hk varies uniformly over b-bit values the probability that digest(hk,m1)=digest(hk,m2) is never significantly greater than $2^{-b}$. The length b of the digests is chosen so that a probability of an attack succeeding of $2^{-b}$ is acceptable.

Step 5b enables a customer therefore to authenticate the Merchant M by comparison of the digests. In the circumstances that the merchant tells the customer the digest (shown to each of M and C at step 5a above) over the phone the customer is able to make a visual comparison with the digest displayed on SD 20 and can for example approve a transaction process by pressing button 28. In the alternative that the digests do not match then the customer can abort the process, using button 29 shown in Figure 2. Other structural arrangements are possible including for example that the Merchant's digest is transmitted to the Customer either because the customer is present and can see the Merchant's equipment, or via the insecure network in an appropriately secure way, e.g. using https over the internet enabling display to the user on a PC using the user's internet browser application. The user is able therefore visually or otherwise to compare the digests shown on the PC 18 and SD 20.

Here, some empirical communication channels are available between the systems that are not forgeable, these channels being quite low-bandwidth channels. An example is communication between computers mediated by ordinary human conversation amongst their users. However, interaction over these channels can still be assumed to be vulnerable to snooping and perhaps blocking. In the following, an "empirical channel" is a low-bandwidth channel which is not forgeable but which is potentially vulnerable to snooping and blocking. The term "anonymous" used herein is intended to mean that it is not necessary for a node to reveal its long-term name, public key etc.

We will term this protocol SHCBK-SP because it is a version of the SHCBK protocols designed to secure communication between a pair of devices. k is now a secret shared between them and can be used as a shared secret key for symmetric key encryption between the merchant and the customer's security device 20.

In a variant of SHCBK-SP, the component {k}_pkM or Message 2 may be replaced by longhash(k) or longhash(pkM,k). This enables Message 2 to be computed significantly faster on a low power SD. In this variant, the value k used in the Message 5 digest is replaced by this new long hash, and the value {k}_pkM is sent from C to M as an additional Message 6. It is thus possible for the SD to perform the asymmetric encryption during the period when the customer is confirming the agreement of the digest values.

The idea of the above protocol works equally well using Diffie-Hellman, where each of messages 1 and 2 contains a D-H token and the key thereby established is used in place of k as the session key:

    1: M -> C: M,C,g^X, longhash(hkM,M)

    2: C -> M: M,C,g^Y,longhash(hkC,C)k := g^{XY}

    3: M -> C: hkM

    4:C -> M: hkC

    5a: C,M display: digest(hkM XOR hkC,(M,C,k))

    5b: C,M agree on this value via human checking

We will term the above protocol SHCBK-PDH because it establishes a Diffie-Hellman-based key which is automatically a shared secret between a pair of nodes using the ideas of SHCBK.

In a variant of this protocol, the value k in Message 5a is replaced by the pair (g^X,g^Y), meaning that (since g^Y can be computed in advance) the SD does not need to perform the expensive exponentiation operation before the digest agreement stage of the protocol, which may be valuable when it is a low power device.

HCBK3, in its standard form, establishes a shared key for an arbitrary-sized group. The present application only requires two parties in the group, namely the customer C and merchant M, so the following description is specialised to that case.

    0. C→M:C,INFO_C
The customer, initiating the protocol, transmits to M its identity C together with other information that it wishes the merchant to know for the purposes of this protocol.

    1. M→C :M,INFO_M
The merchant sends its corresponding information, including a means of initiating secret communication to it which we assume below is a public key pkM.

    2. C→M :longhash(hk)
C invents a new hash key hk. It then sends the merchant a long hash (substantially immune to an attack due to the birthday paradox referred to above) of this value.

    2b.
This step provides some way of ensuring that C will not send a Message 3 while any other node or agent in G is still waiting for a Message 2. The most obvious way of doing this is to use the empirical channel at this point to inform C that all others are committed. For example, when the merchant has received Message 2 it might display an indication of this that the customer can read.

    3. C→M :{hk}_pkM
In this step, C sends each node the hash key hk under M's public key as contained in INFO_M in Message 1, or alternatively sent using any other means of C communicating securely to M that is seemingly contained in Messages 0 and 1. At this point, M can check the value of hk by testing to see if it produces the correct value for Message 2 and they only proceed if this is true.

4a. Each_A A_displays :digest(hk, (C,INFO$_C$,M,INFO$_M$)),
Both parties generate a digest value of the values received in Messages 0 and, influenced by the value hk, and display this value together.

4b. Each_A A→$_E$ EachB :Users compare information
The parties compare the displayed digests. If this check fails, the run is abandoned. In the asymmetric protocol only the customer performs this check.

Each implementation should ensure that the commitment deduced by C in Message 2b does not relate to an earlier run by M. In other words, in Message 4, M should be committed to the same hash key hk that C saw it committed to. This property will naturally hold in many human-mediated symmetric implementations, provided these users follow natural rules. In other implementations it may be necessary or desirable to enforce it via, for example, timing constraints or further empirical communications.

If, in the earlier protocols SHCBK-SP or SHCBK-PDH, the nodes wish to exchange authenticated information akin to the INFO fields described above, they can do so as additions to their first message exchange as in HCBK3. As in that protocol, the INFO fields should be added to the data component of the digest.

This class of protocols are termed HCBK or Hash Commitment Before Knowledge because nodes are committed to their final digests or hashes before they actually know the values of these things.

Other protocols may exist or be developed that would achieve the authenticated transfer of information which would be required to authenticate the connection to the merchant for security device 20 based on the agreement of some value generated at both ends of the protocol. Beneficially, the security device 20 can be adapted to encompass the use of any such protocol to achieve the desired effect.

The essential quality that a protocol requires is that the customer gains a means of communicating securely with the merchant. In particular, the security device 20 requires a means of communicating data to and from the merchant 16 that is both authenticated and secret to them. This would be provided, for example, by them each knowing a symmetric key, that they know is known to nobody else.

The protocols quoted above all achieve the symmetric key, hereinafter referred to as k.

With a third-party protocol the security device provides the means of transmitting the non-spoofable value on the internet (eg. via https) and the operation of the method beyond the initial protocol.

Some possibilities of what happens once the secure connection has been made are described below.

The main point is flexibility: essentially now the card has same degree of connection with the merchant as one in its own credit-card reader, with the added advantage that there is no need to allow merchant's equipment knowledge of anything that must be kept confidential such as the PIN.

In the following it is assumed that the merchant and device have established the key k using the present protocol or similar. But other methods of sending each other secure authenticated messages might be envisaged.

Options are:

A. Operate a protocol that would normally apply between the merchant's own card reader and the card: all information that is normally sent to or from the card is now sent via the key k. The exception is that we do not want to send the PIN unencrypted to the merchant. The verification to the merchant of the PIN in the original protocol may come from one of two forms. It may come as a signal from the card that a value input to it is correct, or it may come through the PIN being sent (encrypted) to the bank for verification.

In the first case the merchant will now require proof that the correct PIN has been entered to a card not in the merchant's direct control within the time-span of the current transaction. This is straightforward if the merchant trusts the SD. If the merchant does not trust the SD, then we must run a protocol something like the following:

PIN0: Card -> M: Id -- unique card ID

(presumably already known to M thanks to earlier parts of the overall transaction,

making this step redundant)

PIN1: M -> Card: N - a fresh nonce

Card prompts SD, customer for PIN, which is transmitted to Card along with a representation T of the transaction that the customer has agreed to.

PIN2: Card -> M: cardsign(Id,N,T)

Here, cardsign is a signature mechanism for cards: if the card has its own certified public key then the above can be signed by that. T is a suitable representation of the information that the customer has signified agreement to by typing the PIN.

The above mechanism can be afforded assurance from the point of view of the merchant by the checks the merchant will carry out on the card as part of the interaction.

Any such mechanism clearly has to be policed so that it is not possible to make an unreasonable number of guesses at the PIN by trial and error: this could be present on the card itself. (Note that if, as at present, it is the merchant's hardware that checks a PIN, then there should be a similar mechanism to prevent anyone with access to such hardware deducing the PIN.)

The second alternative (which would be more effective if any less secure signature mechanism than the above example were used or if more control of PIN guessing is required than is provided by the card itself) is to delegate the decision about whether a PIN is correct to the bank. We now describe mechanisms for achieving this;

Suppose that the card has a long term shared secret with the Bank. We will term it SId for *secret identity,* and assume it has the entropy of a typical strong cryptographic key or nonce, say 160 bits. It is important that this secret never becomes visible outside the card, even to the SD (or else anyone in temporary possession of the card could obtain it with a corrupt SD). There are two possible solutions to this, either have the card perform the calculations involving SId described below or have the Card give the SD one-time entropies based on, for example, a hash of an index, a timestamp and SId.

In the following we describe two methods how the SD can use a one-time entropy (E,x), where E is the entropy itself and x is the information the card has used to generate it. In each case, however, the card itself could perform analogous calculations using Sid itself.

    1. The SD can compute a longhash H of the PIN, (E,x), and a record T of the transaction the customer has approved by entering the PIN. This must contain the public identities of Merchant and Customer, the amount and type of transaction, a unique transaction Id and timestamp. The SD then sends the Merchant $\{H,x,T\}_k$, where k is the session key between SD and Merchant. The Merchant then checks T and forwards $\{H,x,T\}$ to the Bank, which recomputes the hash using its knowledge of the PIN and Sid, and checks it equals H. If so the PIN is verified and presumably the Bank will signal this to the Merchant.

    2. The SD computes $\{PIN,T\}_E$ under some suitable symmetric key encryption algorithm where the (i) the ability to produce this proves knowledge of E, and (ii) it is not feasible for an agent not knowing E to alter $\{X\}_E$ so that it equals $\{X'\}_E$ for any different X'. The SD then sends the merchant $\{\{PIN,T\}_E,x\}_k$, and the contents of this are forwarded to the bank who can once again check the PIN.

Other methods of proving the correctness of the PIN to merchant and/or bank are envisaged, including ones based on public encryption and signature mechanisms. These must have the property that the PIN must not be deducible from what the merchant sees, as would for example be the case if the merchant sees a hash of the PIN together with data entirely known to the merchant: the key to the method 1 above is that there is a cryptographic entropy unknown to the merchant that is included in the hash together with the PIN. It is highly desirable that it also has the property that the merchant cannot use the PIN information for any other transaction. For example, omitting some transaction information in Methods 1 and 2 above might make such abuse by the merchant possible.

We note that the above methodology, provided the transaction information T contains sufficient detail, is equivalent to a signed e-cheque being created by the customer to agree to the given transaction. It would be natural for the bank, as well as checking the PIN, to decide whether or not to authorise the transaction and to report accordingly to the Merchant. Thus we have a second option:

B. Have the customer construct an e-cheque either using the mechanisms described above or in some other way, and have the SD transmit this to the merchant for onward transmission to the Bank.

In the event that some other means than a PIN is used to verify the presence of the customer, if this (like a PIN) has a unique correct value than exactly the same logic as for the PIN can be used. If there are many correct values, for example fingerprint, iris or facial images, then Method 1 above is not suitable for sending this data to the Bank. Method 2 remains suitable, as would Method 1 if the correctness or otherwise of the data was determined by the card itself so that the data itself does not have to be sent.

After the PIN is verified, Card, customer, merchant and bank would continue to interact so as to complete the transaction satisfactorily, for example as in present Chip and PIN methods, with all transactions between SD and merchant encrypted under k.

### Toeplitz matrices

An explanation is given here on the use of Toeplitz matrices and related arithmetic techniques in digest function calculation. A Toeplitz matrix is one whose diagonals (top left to bottom right) each consist of identical items. An *n* by *b* matrix can thus be described by a sequence of *n*+*b*-1 numbers $V(1-b)...V(0),V(1), ....V(n-1)$ in which the matrix value *m(i,j)* always equals *V(i-j)*.

It is known that a perfect Universal Hash function *Uh(k,x)* can be computed by deriving a Toeplitz matrix of uniformly distributed independent random variables over {0,1} from the uniformly distributed value *k* (so *V(i)* is the value taken by the Ah random variable) and multiplying the bit value. of *x* by it. Thus

$$Uh(k,x)(j) = \Sigma_{i=0,n-1}V(i\text{-}j)*x_i$$

calculates a *b*-bit hash of *n*-bit data.

Our requirements of a digest function with output length *b* are that,

1. For any input value x, the function *digest*(k,x), as k varies uniformly over its range, varies uniformly over the set of *b*-tuples of bits.

2. The probability, as k varies uniformly, $\theta$ is any fixed key, and *x # y* are an arbitrary pair of distinct data arguments, that *digest(k⊕ θ,x) = digest(k,y)* is as small as possible. The smallest probability that can apply uniformly to all x and y is $2^{-b}$. We require that there should be no computationally feasible way in which an opponent could increase this probability to more than $2^{-b} + \varepsilon$ for some value $\varepsilon$ much smaller than $2^{-b}$.

This is stronger than the specification of a universal hash function.

This specification is met with $\varepsilon$=0 if calculated using the formula above using a Toeplitz matrix of independent uniform binary random variables. In practice the key *k* cannot be expected to be long enough to produce this many independent random variables R(i). We therefore propose that *k*'s size is within the range of a typical cryptographic entropy (say 160-512 bits) and that instead of random binary bits we use the result of seeding a high-quality pseudo-random number generator PRNG with *k*.

It is believed there are advantages in using a PRNG that (a) is not a predetermined linear one and, more than this, (b) has a high degree of *k*-driven randomness about the rules it uses to compute successive random bits from previous ones. Based on this model, we suggest two ways of calculating a digest function.

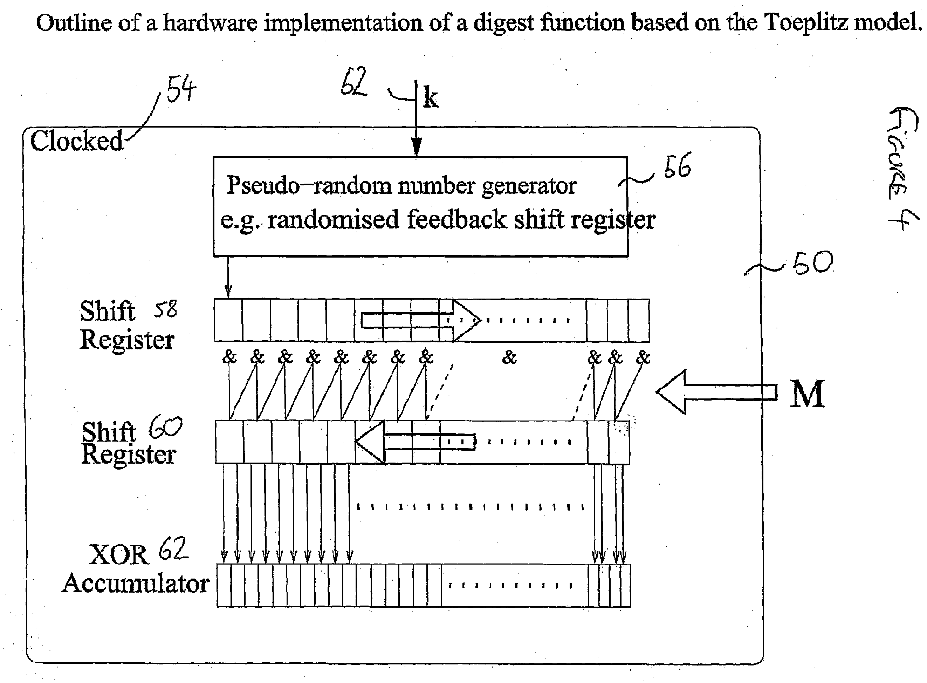

The first is a hardware implementation, as might be implemented as a custom chip or on an FPGA. Referring to figure 4 there is shown a programmable device 50 such as an ASIC or FPGA comprising an interface 52 for communication with device 50 including input of key k, as shown schematically. Device 50 also comprises a clock 54, a PRNG 56, shift registers 58 and 60, and an XOR accumulator 62 as well a controller for ensuring suitable functionality.

In the case of a hardware implementation a good candidate for this PRNG 56 is a feedback shift register seeded with *k* in which some of the parameters are randomly driven by part of *k* independent of the register's feed, or possibly several such registers.

For each bit-per cycle (*bpc*) of the PRNG 56, a separate circuit of the type shown in figure 4 can be used. This contains two shift registers 58, 60, one of length *b*/2+1 containing, the pseudo-random bits and one of length *b*/2 through which a fraction of the digested information *M* is piped. (*M* is divided for this purpose into *bpc* fractions.) Each of these registers is shifted by one bit each cycle in opposite directions as shown in figure 4, and they are initialised with values (possibly 0) functionally dependent on the key *k*. *b* bits are produced by &-ing each bit of the *M*-stream with the bit of the PRNG-stream above it and the bit of the PRNG-stream to the right of this place.

The resulting *b* bits are XOR-ed into an accumulator 62, which is itself initialised with some value functionally dependent on *k*.

The *b*-bit values produced from each of the *bpc* fractions of *M* are XOR-ed together to produce the final digest.

An equivalent effect can be produced with a single pair of shift registers of lengths *bpc∗b*/2 and *bpc∗b*/2+1) that are shifted *bpc* each cycle.

The second way of calculating a digest function is software driven. In the case of a software implementation (i.e. one implemented using the functionality of a microprocessor rather than customised hardware) it is desirable to have a way of letting every bit of the data stream *x* influence every bit of the output, in a manner akin to the ideal model, while only shifting the input stream efficiently while dealing with that stream in whole or half-word blocks.

One way of achieving this is to use integer multiplication in half-word blocks: suppose that $r_i$ (*i* in {(1-$D$,.2-$D$,.....)}) are a series of half-word pseudo-random blocks seeded by *k*, that $x_i$ are the half-word blocks of *x*, where the desired digest length is *D* half words in length. Then we observe that in the whole word $r_i{*}x_i$ each bit of $x_i$ has a direct influence, for each bit $z_k$ of the lower half word of the result, either on $z_k$ or the corresponding bit of the upper half word.

We therefore calculate, for each *i*, the half-word products of $x_i$ with the *D*+1 successive blocks $r_j$, where *i-j* is in the range {-1..*D*-1}. The upper half words of the products from the range {-1..*D*-2} are XORed with the contents of accumulators calculating the *D* output words, as are the lower half words of the products from the range {0..*D*-1} (both in order, so the lower half word of the product $r_j{*}x_i$ aligns with the upper half word of the product $r_{j+1}{*}x_i$).

By this means a single half-word multiplication achieves an effect, which is equivalent as far as satisfying the digest specification is concerned, to a *w*/2 by *w*/2 block of the Toeplitz matrix multiplication where *w* is the number of bits in a word.

The same technique will work for whole-word digests provided there is a fast implementation of integer multiplication available that returns both words of the natural double-length result. In that case a single multiplication replaces a *w* by *w* block of the Toeplitz multiplication.

The above relates to a software implementation of digest and is based on the way integer multiplication can provide a sufficiently good analogue of the Toeplitz model. However, many other ways of using multiplication and other operations structurally similar to a convolution to implement digest functions might be used.

**Applications**

To implement the above protocols, the security device 20 preferably comprises a display 24 for the digest, an "OK" or confirm button 28 and an "ABORT" button 29. Preferably, display 24 is capable of displaying transaction information (payee, amount...) and a way of inputting a PIN (see below).

k can now be used to protect and authenticate the interactions between a chipped card 36 coupled with an SD 20, and the merchant it is connected to. Of course it is down to the design of these interactions as to whether any information useful to the merchant can be gleaned long term from this: see the discussion above.

Telephone technology

Such technology could be built into telephones or they could be built with a plug for SDs 20. Aside from this it could be an add-on on the wire between telephone and socket, or work via sound signals though the telephone headset. Security device 20 can comprise an audio transducer arrangement for input and output of audio signals such as a microphone and speaker.

The assumption here is that authentication would arise because the customer and a representative of the merchant on the telephone would be playing the human roles in the protocol. They would compare digests verbally, using option (1) or (2) as set out in the following section.

Mobile phones might have modes where they act as SDs. However they represent powerful computers in themselves, and may well be open to viruses. So it may be pragmatic that they enter some sort of special mode when their interface (probably literally a plug-in with the card reader) is active. This would be more straightforward in the case that a mobile phone was playing the role of a SD for the internet (see below), because it would not need to be running its normal telephone function. Of course a mobile phone could provide a communication medium for a separate SD without such precautions.

Internet technology

At first one would think that it is impossible to use HCBK-style protocols to connect a card over the Internet, since no human is involved at the merchant end of the transaction.

If, however, we assume that existing secure Internet connections over https provide an adequate level of security for customers to interact with merchants or banks, then the problem is soluble. In other words, the solution below handles the transmission of data for chip and PIN at least as securely as existing internet transactions involving credit card numbers, and transactions on internet banking, are handled. The advantages over the traditional way of using credit cards online are the closer engagement with the card, and the additional authentication provided by the PIN, and the possibility of not revealing the credit card number to the merchant.

We do not assume that the customer's computer is secure in any other respect. For example our method is secure against malicious processes that may be subverting the connection between the SD and the merchant, in the sense that no sensitive information leaks and the transaction cannot be perverted.

The first part of the solution is to have the SD connected with the merchant via an insecure network. The most likely mode is for it to be connected via the customer's computer (i.e. the device that is hosting the browser over which the transaction is being set up). The manner of this connection does not matter: it could be Bluetooth, some other wireless technology, infra-red, or via a USB cable. Alternatively the connection between SD and merchant could be by other means such as telephone. The SD/card combination then communicates with the merchant, both in setting up an encrypted session like the protocol above, and in actually transmitting and receiving information using the established session key. This interaction would probably be enabled and directed by the browser or an associated process in the case that the SD were connected via that computer.

The solution to the lack of a human at the merchant is that an https connection plays the role of the authenticated channel from merchant to customer. The SD runs one of the protocols above with M, and M displays his view of the digest on the customer's browser using a secure web connection.

This will not authenticate the customer to the merchant, but will authenticate the merchant and secret key from the point of view of the customer, which was the main problem identified above.

We are therefore running an Asymmetric version of the protocol, in the sense described above.

So aside from the role of https in signalling the merchant's digest to the customer, the customer's computer, and the Internet that links them, is treated as insecure.

The secure link is purely between the SD and the merchant (who will presumably also be running the protocol in secure hardware).

As outlined above, a telephone augmented by a means of interfacing with the chip could become an SD for the internet provided it had a means of communicating either with the customer's own computer or directly with the merchant's.

The comparison of digests can be implemented at least in any of the following three ways, or conceivably a combination of more than one of them:

1) The SD's digest value appears on a display; the customer compares this value with the one communicated by the merchant; the customer presses "OK" if the two agree.

2) The customer types in the digits of the merchant's digest to his or her SD. If these agree with the value that the SD has computed, then the protocol progresses.

3) For internet or customer-present transactions, an optical reader on the SD reads, figures or a barcode or similar from the https display or the merchant's own equipment. If this value agrees with the value that the SD has computed, the protocol progresses.

The vital thing in each case is that the merchant's digest is obtained from a source that the customer can trust completely. This would not usually be the case if (3) above were replaced by a form of electronic communication invisible to the customer, for then the customer would not know if it was coming from the correct source or not.

Except for option 2 above, there is no reason why the digest has to be presented as a series of alphanumeric or similar characters. Any medium that allows either human or optical reader to compare accurately would suffice.

Postal transactions

Two ways are identified here of using an SD for a postal transaction.

The first is that any technology for generating a one-time time-limited credit card number for the card's account could be integrated into the SD.

The second would involve the customer's SD making a secure connection to his or her bank using either of our protocols, or some other protocol giving adequate security, via telephone or Internet. Once a secure connection has been made an electronic cheque of a form similar to that set out earlier would be registered at the bank, which would generate a unique identifier for this transaction. The customer would write this number on the order form, which the merchant would verify upon receipt and carry forward the transaction.

If the SD has a printing device incorporated then, in either of the above options, it would be possible for the SD to output a label or similar that could be affixed to the order form.

Customer present

A traditional credit card transaction gives the merchant full access to the card, meaning that the merchant gains long-term knowledge of the card, and potentially its PIN (e.g. by a fake PIN-input device, video etc). The use of the customer's SD at the point of sale in conjunction with any of the methods of conducting a transaction as set out above would, depending on which was used, either in whole or part remove any possibility of electronic capture of this information and give the customer more control to prevent PIN-snooping.

This could work either at traditional tills or at vending machines or similar that could display a digest.

Other uses

The technology set out herein is capable of making secure connections over a wide range of applications. In particular, the use of an https-based empirical channel will permit users to access wide range of services securely and thereby extend the usability of the HCBK family of protocols and any other protocol that authenticates two or more parties by manual comparison of data displayed on devices.

## Claims

1. A method of performing a financial transaction agreed between a customer and a merchant comprising authenticating the merchant to the customer by authenticating communication between the customer (C) and the merchant (M) over an insecure, high bandwidth communications network, in which the customer authenticates the merchant using a communications protocol comprising a first communications phase through a first communications channel over the insecure, high bandwidth communications network to establish a secure mode of communications between the customer and merchant, followed by a second communications phase of receiving information from the merchant over a second communications channel, such as an empirical channel, and enabling a user to make a human comparison of the information received from the merchant with information generated by the customer thereby enabling the user to authenticate the merchant in the event that the information from both the customer and the merchant agrees and enabling appropriate instructions to a third party, such as a bank, via the communications network thereby to enable completion of the transaction.

2. A method according to claim 1, wherein instructional data, such as a PIN, required by the third party to enable the transaction, is communicated to the third party in a secure form such that it is not evident to the merchant

3. A method according to claim 1 or 2 wherein the third party is a bank and the method comprises enabling secure communication by a customer with the bank, wherein the customer has a long term shared secret (Sld) with the bank to enable secure communication therewith and the communications protocol enables the customer's knowledge of the long term shared secret (Sld) to be communicated to the bank but remain secret during such communication

4. A method according to claim 3 comprising the step of using the long term secret key (Sld) to create a one-time entropy that can be used within the SD.

5. A method according to any preceding claim comprising the step of a customer providing a merchant with an e-cheque for an agreed transaction (T).

6. A method according to any preceding claim comprising enabling an electronic card transaction between a customer, merchant and a bank wherein the merchant is assured that the card is genuine and that all correct identification information required for a transaction such as a PIN have been entered for the transaction, the customer is assured that he is paying the amount of money desired to the intended merchant and is assured that the information given cannot be abused by a party who may be listening or who may be interfering with the interaction, and wherein the customer's information cannot be abused, intentionally or otherwise (e.g. in a security leak or via a corrupt employee) by the merchant, and wherein the bank authorises the transaction.

7. A method according to any preceding claim wherein the third party is a bank and at least part of the data transferred to the bank is kept secret from the merchant.

8. A method according to any preceding claim comprising the step of agreeing a session key for communication between customer and merchant.

9. A method according to any preceding claim wherein a communication channel within the insecure communications network comprises a non-spoofable empirical channel based on a standardised communications or transfer protocol, and wherein the transfer protocol is https, and the user is able to use an Internet browser application to view a Merchant digest.

**Patentansprüche**

1. Verfahren zur Ausführung einer finanziellen Transaktion, die zwischen einem Kunden und einem Händler vereinbart wurde, die Authentifizierung des Händlers beim Kunden durch Authentifizierungskommunikation zwischen dem Kunden (C) und dem Händler (M) über ein ungesichertes Kommunikationsnetzwerk hoher Bandbreite, in der der Kunde den Händler unter Anwendung eines Kommunikationsprotokolls authentifiziert, umfassend, das eine erste Kommunikationsphase über einen ersten Kommunikationskanal durch das ungesicherte Kommunikationsnetzwerk hoher Bandbreite zur Herstellung einer gesicherten Kommunikationsart zwischen dem Kunden und dem Händler umfasst, gefolgt von einer zweiten Kommunikationsphase zum Empfang von Information vom Händler über einen zweiten Kommunikationskanal, wie etwa einen empirischen Kanal, und dem Benutzer einen menschlichen Vergleich vom Händler erhaltener Information mit Information, die vom Kunden erzeugt wurde, ermöglichend, wodurch dem Benutzer ermöglicht wird, den Händler zu authentifizieren, wenn die Information sowohl vom Kunden, wie auch vom Händler übereinstimmt, und angemessene Anweisungen an eine dritte Partei, wie etwa eine Bank, über das Kommunikationsnetzwerk ermöglichend, um dadurch den Abschluss der Transaktion zu ermöglichen.

2. Verfahren nach Patentanspruch 1, in dem Anweisungsdaten, wie etwa eine PIN, die von der dritten Partei erfordert werden, um die Transaktion zu ermöglichen, der dritten Partei in sicherer Form übermittelt werden, derart dass sie dem Händler nicht erkennbar sind.

3. Verfahren nach Patentanspruch 1 oder 2, in dem die dritte Partei eine Bank ist und das Verfahren umfasst, eine sichere Kommunikation zwischen einem Kunden und der Bank zu ermöglichen, wobei der Kunde mit der Bank über ein gemeinsames Langzeit-Geheimnis (SId) verfügt, um sichere Kommunikationen mit ihr zu ermöglichen, und das Kommunikationsprotokoll ermöglicht, der Bank die Kenntnis des gemeinsamen Langzeit-Geheimnisses (SId) durch den Kunden mitzuteilen, wobei es während einer derartigen Kommunikation geheim bleibt.

4. Verfahren nach Patentanspruch 3, den Schritt der Verwendung des Langzeitgeheimschlüssels (SId) zur Erzeugung einer einmaligen Entropie, die innerhalb der Sicherheitsvorrichtung verwendet werden kann, umfassend.

5. Verfahren nach irgendeinem der vorangehenden Patentansprüche, den Schritt umfassend, dass ein Kunde einem Händler einen Elektronischen Scheck für eine vereinbarte Transaktion (T) übermittelt.

6. Verfahren nach irgendeinem der vorangehenden Patentansprüche, die Ermöglichung einer Bankkarten-Transaktion zwischen einem Kunden, einem Händler und einer Bank umfassend, bei der dem Händler sichergestellt wird, dass die Karte echt ist und dass alle Identifizierungsdaten, die für einen Transaktion erforderlich sind, wie etwa eine PIN, für die Transaktion korrekt eingegeben wurden, dem Kunden sichergestellt wird, dass er den gewünschten Geldbetrag dem beabsichtigen Händler zahlt, und sichergestellt wird, dass die gegebene Information nicht von einer Partei missbraucht werden kann, die abhören oder in die Transaktion eingreifen könnte, und wobei die Kundeninformation vom Händler weder absichtlich noch anderweitig (beispielsweise durch ein Sicherheitsleck oder über einen korrupten Angestellten) missbraucht werden können, und wobei die Bank die Transaktion genehmigt.

**7.** Verfahren nach irgendeinem der vorangehenden Patentansprüche, in dem die dritte Partei eine Bank ist und mindestens ein Teil der der Bank übermittelten Daten vor dem Händler geheim gehalten wird.

**8.** Verfahren nach irgendeinem der vorangehenden Patentansprüche, den Schritt umfassend, einen Sitzungsschlüssel für die Kommunikation zwischen Kunde und Händler zu vereinbaren.

**9.** Verfahren nach irgendeinem der vorangehenden Patentansprüche, in dem ein Kommunikationskanal im unsicheren Kommunikationsnetzwerk einen nicht-verfälschbaren empirischen Kanal auf der Basis eines genormten Kommunikations- oder Übertragungskanals umfasst, und wobei das Übertragungsprotokoll HTTPS ist und der Benutzer in der Lage ist, eine Internet-Browser-Anwendung zu verwenden, um eine Händlerübersicht einzusehen.

**Revendications**

**1.** Procédé permettant d'effectuer une transaction financière acceptée entre un client et un négociant comprenant une étape consistant à authentifier le négociant auprès du client par une authentification de la communication entre le client (C) et le négociant (M) sur un réseau de communication à large bande passante non sécurisé par laquelle le client authentifie le négociant en utilisant un protocole de communication comprenant une première phase de communication par un premier canal de communication sur le réseau de communication à large bande passante non sécurisé pour établir un mode de communication sécurisé entre le client et le négociant, suivie par une seconde phase de communication consistant à recevoir une information provenant du négociant sur un second canal de communication tel qu'un canal empirique, et en permettant à un utilisateur d'effectuer une comparaison humaine de l'information reçue du négociant avec l'information générée par le client en permettant ainsi à l'utilisateur d'authentifier le négociant si les informations provenant du client et du négociant sont en accord et de permettre de transmettre des instructions appropriées vers une troisième partie telle qu'une banque par l'intermédiaire du réseau de communication, en permettant ainsi l'achèvement de la transaction.

**2.** Procédé conforme à la revendication 1, selon lequel
des données d'instruction telles qu'un code PIN demandées par la troisième partie pour permettre la transaction sont communiquées à la troisième partie sous une forme sécurisée de sorte qu'elles ne soient pas évidentes pour le négociant.

**3.** Procédé conforme à la revendication 1 ou 2, selon lequel
la troisième partie est une banque et le procédé comprend une étape consistant à permettre une communication sécurisée par un client avec la banque, le client ayant une clé secrète partagée à long terme (SId) avec la banque pour permettre une communication sécurisée avec celle-ci, et le protocole de communication permettant que la connaissance par le client de la clé secrète partagée à long terme (SId) soit communiquée à la banque mais demeure secrète pendant cette communication.

**4.** Procédé conforme à la revendication 3, comprenant une étape consistant à utiliser la clé secrète partagée à long terme (SId) pour créer une entropie unique pouvant être utilisée dans la carte SD.

**5.** Procédé conforme à l'une quelconque des revendications précédentes,
comprenant une étape selon laquelle un client fournit au négociant un chèque informatique pour permettre une transaction acceptée (T).

**6.** Procédé conforme à l'une quelconque des revendications précédentes,
comprenant une étape consistant à permettre une transaction par carte électronique entre un client, un négociant et une banque, le négociant étant assuré que la carte est véritable, et que la totalité de l'information d'identification correcte nécessaire pour permettre la transaction telle qu'un code PIN a été entrée pour la transaction, le client étant assuré qu'il paye la somme d'argent désirée au négociant envisagé et que l'information donnée ne puisse pas être utilisée de manière abusive par une partie pouvant être à l'écoute, ou pouvant interférer avec l'interaction, et l'information du client ne pouvant pas être utilisée de manière abusive de façon intentionnelle ou autre (par exemple dans une fuite dans la sécurité ou par l'intermédiaire d'un employé corrompu) par le négociant, et la banque autorisant la transaction.

**7.** Procédé conforme à l'une quelconque des revendications précédentes,
selon lequel la troisième partie est une banque et au moins une partie des données transférées à la banque sont maintenues secrètes pour le négociant.

**8.** Procédé conforme à l'une quelconque des revendications précédentes,
comprenant une étape consistant à accepter une clé de session pour permettre une communication entre le client et le négociant.

**9.** Procédé conforme à l'une quelconque des revendications précédentes,

selon lequel un canal de communication dans le réseau de communication non sécurisé comprend un canal empirique ne pouvant pas être usurpé fondé sur des communications standardisées ou un protocole de transfert, et le protocole de transfert est le protocole https et l'utilisateur est susceptible d'utiliser une application de navigateur internet pour visionner un aperçu du négociant.

| Merchant 16 | | Bank 14 |

15

17

Network 12

13

10

11

19

Customer Security Device 20

21

Customer Unit 18

Figure 1

Figure 2

Figure 3:SHCBK-SP

Outline of a hardware implementation of a digest function based on the Toeplitz model.

**EP 2 536 062 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030126094 A

- WO 0219211 A